# EUROPÄISCHE PATENTSCHRIFT

(11) **EP 1 612 455 B1**
(45) Veröffentlichungstag und Bekanntmachung des Hinweises auf die Patenterteilung: **07.02.2007**
(21) Anmeldenummer: 05012277.9
(22) Anmeldetag: 08.06.2005
(51) Int. Cl.: F16H 59/02, F16H 59/10, G05G 1/06

(54) **Schalt-/Wählhebel eines Kraftfahrzeuggetriebes**
Gearshift/selector lever of a vehicle transmission
Levier de changement/sélection de vitesses pour transmission d'un véhicule

(30) Priorität: 30.06.2004 DE 102004031940
(43) Veröffentlichungstag der Anmeldung: 04.01.2006
(73) Patentinhaber: ZF FRIEDRICHSHAFEN AG, 88038 Friedrichshafen (DE)
(72) Erfinder: Giefer, Andreas, 49448 Lemförde (DE); Meyer, Jörg, 49419 Wagenfeld (DE)

(56) Entgegenhaltungen:
- EP-A- 0 028 950
- DE-A1- 2 213 359
- DE-U1- 20 317 911
- US-A- 3 527 115
- US-A- 4 343 202

## Beschreibung

Die Erfindung betrifft einen Schalt-/Wählhebel eines Kraftfahrzeuggetriebes zum manuellen, automatischen oder semiautomatischen Schalten, mit einem Handknauf, der am oberen Ende des Schalt-/Wählhebels befestigbar ist und eine Griffmöglichkeit für die Hand des Kraftfahrzeugfahrers bildet und einem Entsperrmechanismus, der durch Ziehen oder durch Drücken einer Hülse in Richtung Handknauf entsperrt, wodurch das Einlegen des Schalt-/Wählhebels in eine gewünschte Getriebeposition ermöglicht wird.

Der Entsperrmechanismus kann beispielsweise bei einem manuellen Schaltgetriebe dann entsperrt werden, um den Schalthebel in die Rückwärtsgangposition bewegen zu können. Bei einem automatischen Getriebe kann durch den gelösten Entsperrmechanismus der Wählhebel aus der Parkposition herausbewegt werden. Auch bei einem semiautomatischen Getriebe oder einer shift by wire"-Schaltung kann ein solcher Entsperrmechanismus eingesetzt werden. Bei Verwendung eines Entsperrmechanismus in einem Kraftfahrzeuggetriebe ergibt sich für die Befestigung des Handknaufes folgendes Problem:
Der Handknauf des eingangs beschriebenen Schalt-/Wählhebels, wird meist auf den Schalt-/Wählhebel aufgeschraubt oder aufgepresst. Eine nicht sichtbare Fixierung beziehungsweise Befestigungsmethode über zum Beispiel einen Klemm- oder Haltering ist unter dem Zugmechanismus nur schwer oder gar nicht zu realisieren, da der in Frage kommende Bereich durch den Entsperrmechanismus und/oder die Hülse abgedeckt ist.

Auf dem Schalt-/Wählhebel aufgeschraubte Handknäufe haben den Nachteil, dass die Positionierung stark vom Drehmoment der Verschraubung abhängt. Dieses Problem tritt insbesondere nach mehrmaligem Demontieren auf, wodurch die Haltekraft der Gewindegänge nachlässt und der Handknauf nicht mehr in der gewünschten Ausrichtung optimal befestigt werden kann. Aufgepresste oder aufgeschlagene Handknäufe lassen sich meist nur durch Beschädigung oder Zerstörung des Handknaufes demontieren, was zusätzliche Kosten verursacht. Außerdem ist die Montage solcher Handknäufe in der Werkstatt nicht unproblematisch.

Zudem ist aus der EP-A-O 028 950 A2 ein Schalt- bzw. Wählhebel gemäß der Oberbegriff der Anspruchs 1 mit einem Handknauf, einem Entsperrmechanismus sowie einer Hülse bekannt, wobei durch Entfernen eines Querstiftes, die Hülse relativ nach unten verschiebbar ist, so dass die Länge des Entsperrmcchanismus verkürzt werden kann. Durch Einsetzen des Querstiftes ist die Länge des Entsperrmechanismus wieder reversibel verlängerbar. Zur Demontage und Montage des Querstiftes wird in nachteiliger Weise ein Werkzeug benötigt. Zudem ist eine genaue Positionierung der beiden zu verbindenden Bauteile notwendig, so dass die Demontage und Montage entsprechend aufwendig und kostenintensiv ist.

Der Erfindung liegt die Aufgabe zugrunde, einen Schalt-/Wählhebel eines Kraftfahrzeuggetriebes zum manuellen, automatischen oder semiautomatischen Schalten nach dem Oberbegriff des Patentanspruches 1 derart auszuführen, dass alternative Knaufbefestigungen ermöglicht werden. Dabei sollen die Fixierelemente nicht im sichtbaren Bereich des Handknaufes zu sehen sein. Es sollen also beispielsweise Schrauben mit Schraublöchern vermieden werden. Außerdem sollen die Montage und Demontage des Handknaufes ohne aufwendige Montagevorrichtungen und rasch zu bewerkstelligen sein, damit auch in der Kundendienstwerkstatt eine Handknaufmontage und -demontage erleichtert wird.

Die Aufgabe der Erfindung wird durch einen Schalt-/Wählhebel eines Kraftfahrzeuggetriebes zum manuellen, automatischen oder semiautomatischen Schalten mit den Merkmalen des Anspruches 1 gelöst. Vorteilhafte Weiterbildungen der Erfindung sind Gegenstand untergeordneter Patentansprüche.

Die Erfinder haben erkannt, dass es vorteilhaft ist, den Entsperrmechanismus so auszuführen, dass dieser entlang dem Schalt-/Wählhebel verkürzt werden kann. Dabei soll eine so große Verkürzung möglich sein, dass der untere Bereich des Handknaufes um den Schalt-/Wählhebel frei liegt. In diesem Bereich, der bei bisherigen Schalt-/Wählhebeln äußert schwer oder gar nicht zugänglich war, können Befestigungselemente für den Handknauf angebracht werden, die in eingebauter Schalt-/Wählhebelsituation nicht sichtbar sind. Der Handknauf kann beispielsweise in einer Nut verrasten und über einen Haltering, der von unten aufgeschoben wird, fixiert werden.

Demgemäß wird vorschlagen, den bekannten Schalt-/Wählhebel eines Kraftfahrzeuggetriebes zum manuellen, automatischen oder semiautomatischen Schalten, mit einem Handknauf, der am oberen Ende des Schalt-/Wählhebels befestigbar ist und eine Griffmöglichkeit für die Hand des Kraftfahrzeugfahrers bildet und einem Entsperrmechanismus, der durch Ziehen oder Drücken einer Hülse in Richtung Handknauf entsperrt, wodurch das Einlegen des Schalt-/Wählhebels in eine gewünschte Getriebeposition ermöglicht wird, dahingehend zu verbessern, dass der Entsperrmechanismus derart ausgeführt ist, dass dessen Länge reversibel verkürzt werden kann, so dass bei verkürzter Länge die Unterseite des Handknaufes im Bereich des Schalt-/Wählhebels zugänglich wird.

Erfindungsgemäß ist daher vorgesehenes, dass der Entsperrmechanismus zumindest einen lösbaren Rastmechanismus aufweist, der in einer ersten Rastposition eine Kraftübertragung zwischen Hülse und Entsperrmechanismus ermöglicht. Durch diesen lösbaren Rastmechanismus kann zum einen die Länge des Entsperrmechanismus fixiert und zum anderen eine sichere Kraftübertragung zwischen Hülse und Entsperrmechanismus gewährleistet werden. Um zusätzlich die Position des Entsperrmechanismus, in der der Handknauf im unteren Bereich zugänglich ist, zu halten, weist der Rastmechanismus eine zweite Rastposition auf, mit der die verkürzte Länge des Entsperrmechanismus fixiert wird. Hierdurch können Arbeiten an der Unterseite des Handknaufs ohne Zusatzwerkzeug durchgeführt werden.

Hierdurch wird erreicht, dass der Unterbereich des Handknaufes nahe dem Schalt-/Wählhebel nun zugänglich wird, wodurch an dieser Stelle neue Befestigungsvarianten des Handknaufes adaptiert werden können, die bisher, aufgrund der Unzugänglichkeit dieses Bereiches, nicht möglich waren.

Eine Ausführungsvariante des neuen Entsperrmechanismus verfügt über zumindest zwei Baugruppen, die entlang des Schalt-/Wählhebels gegeneinander, vorzugsweise ineinander, verschiebbar ausgeführt sind, wodurch eine Verkürzung des Entsperrmechanismus resultiert. Beispielsweise können die Baugruppen teleskopartig ineinander schiebbar ausgeführt sein.

Zwischen den mindestens zwei Baugruppen kann das Zugelement angeordnet werden. Das Zugelement kann beim Auseinanderfahren der beiden Baugruppen ab einer bestimmten Länge eingreifen und eine Kraftübertragung zwischen den Baugruppen ermöglichen.

Als Zugelement eignet sich beispielsweise eine Zugstange, ein Seil oder ein Kettenelement.

Zwischen den Baugruppen kann ein Federelement angeordnet sein. Soll die Länge des Entsperrmechanismus verkürzt werden, wird durch Bewegung von zumindest einer Baugruppe in Richtung der anderen das Federelement verformt. Soll die ursprüngliche Länge des Entsperrmechanismus wieder hergestellt werden, kann hierzu zumindest teilweise die Federkraft, des zuvor verformten Federelementes genutzt werden.

Die mindestens zwei Baugruppen können als Hülsen ausgebildet sein, die über den Schalt-/Wählhebel geschoben werden. Hierbei ist eine Führung der Hülsen entlang des Schalt-/Wählhebels gewährleistet, wodurch die Längenänderung des Entsperrmechanismus besonders leichtgängig bewerkstelligt werden kann.

Es ist von Vorteil, wenn die Länge des Entsperrmechanismus um mindestens 10 %, vorzugsweise um mindestens 20 %, vorzugsweise um mindestens 30 %, der ursprünglichen Länge verkürzbar ist. Hierdurch wird eine optimale Zugänglichkeit der Unterseite des Handknaufes im Bereich des Schalt-/Wählhebels gewährleistet.

Der Rastmechanismus sollte derart ausgeführt sein, dass die erste Rastposition durch Bewegung der Hülse vom Handknauf weg gelöst wird und automatisch in die zweite Rastposition einrastet. Hierdurch kann die erste Rastposition allein durch manuellen Kraftaufwand und ohne Zusatzwerkzeug gelöst werden und weiterhin die zweite Rastposition durch manuellen Kraftaufwand eingerastet werden.

Ein Lösen der zweiten Rastposition und ein Einrasten in die erste Rastposition können in umgekehrter Reihenfolge erfolgen.

Der Rastmechanismus kann durch zumindest eine Nut und eine in diese eingreifende Rastnase gebildet werden, wobei entweder die Nut oder die Rastnase an der Zugstange oder an einer Baugruppe angeordnet sein kann.

Der Handknauf kann mindestens ein lösbares Befestigungsmittel aufweisen, mit dem dieser auf dem Schalt-/Wählhebel befestigt werden kann, wobei das Befestigungsmittel nicht sichtbar ist, wenn die Hülse unterhalb des Handknaufes angeordnet ist. Es werden hierdurch sowohl optische Aspekte als auch Aspekte der Kostenersparnis kombiniert.

Es ist günstig, wenn ein Haltering vorgesehen ist, der von unten an den Handknauf geschoben wird und das Befestigungsmittel des Handknaufs auf dem Schalt-/Wählhebel fixiert. Hierdurch ergibt sich eine nach außen hin nicht sichtbare und wieder lösbare Verbindung des Handknaufes auf dem Schalt-/Wählhebel.

Alternativ oder ergänzend dazu, kann der Handknauf eine klipsbare Verbindung zur Befestigung an dem Schalt-/Wählhebel aufweisen.

Um eine Verdrehung des Handknaufes um den Schalt-/Wählhebel verhindern zu können, kann der Schalt-/Wählhebel zumindest eine Bohrung und/oder eine Nut aufweisen, in die das Befestigungsmittel des Handknaufes eingreift.

Das Befestigungsmittel kann als Bajonettverschluss ausgeführt sein.

Insgesamt wird also durch die Erfindung ein Schalt-/Wählhebel mit Entsperrmechanismus eines manuellen, automatischen oder semiautomatischen Kraftfahrzeuggetriebes zur Verfügung gestellt, der mehrere Vorteile gegenüber bekannten Schalt-/Wählhebeln bietet. Der Handknauf wird nun zu Montage- und Demontagezwecken auf der Unterseite im Bereich des Schalt-/Wählhebels zugänglich. Der neue Schalt-/Wählhebel erlaubt es außerdem, alternative Handknaufbefestigungen am Schalt-/Wählhebel einzusetzen, die bisher entweder im Sichtbereich angebracht werden mussten oder mit schwer lösbaren Fixierelementen auskommen mussten. Hierdurch bieten sich optische Vorteile für den Kunden, da zum Beispiel sichtbare Schrauben und die Schrauböffnungen nun entfallen. Aber auch unter dem Aspekt der Kostenersparnis ist der neue Schalt-/Wählhebel gegenüber den bisherigen Schalt-/Wählhebeln verbessert ausgeführt. Durch die alternativen Befestigungsvarianten für den Handknauf kann bereits durch die Wiederverwendbarkeit von Bauteilen, der Handknauf kann mehrmals demontiert und montiert werden, Kosten eingespart werden. Außerdem wird durch die besondere Ausführung bereits der Montageaufwand verringert. Es sind beispielsweise keine Pressvorrichtungen zum Verpressen des Handknaufes auf dem Schalt-/Wählhebel mehr notwendig.

Weitere Merkmale und Vorteile der Erfindung ergeben sich aus den Unteransprüchen und der nachfolgenden Beschreibung bevorzugter Ausführungsbeispiele unter Bezugnahme auf die Zeichnungen.

Die Figuren zeigen im Einzelnen:
- Figur 1:: Schalt-/Wählhebel eines manuellen Kraftfahrzeuggetriebes mit verkürztem Entsperrimechanismus für den Rückwärtsgang;
- Figur 2:: Schalt-/Wählhebel aus Figur 1 mit rückverlängertem Entsperrmechanismus;
- Figur 3:: Detailansicht des Entsperrmechanismus aus Figur 2.

Auch wenn in den gezeigten Figuren der neue Schalt-/Wählhebel in einer Ausführung mit einer Rückwärtsgangsperre eines manuellen Kraftfahrzeuggetriebes gezeigt wird, schließt dies die Anwendung auf andere Entsperrmechanismen, zum Beispiel zur Entsperrung der Driveposition, in automatischen oder semiautomatischen Kraftfahrzeuggetrieben, nicht aus.

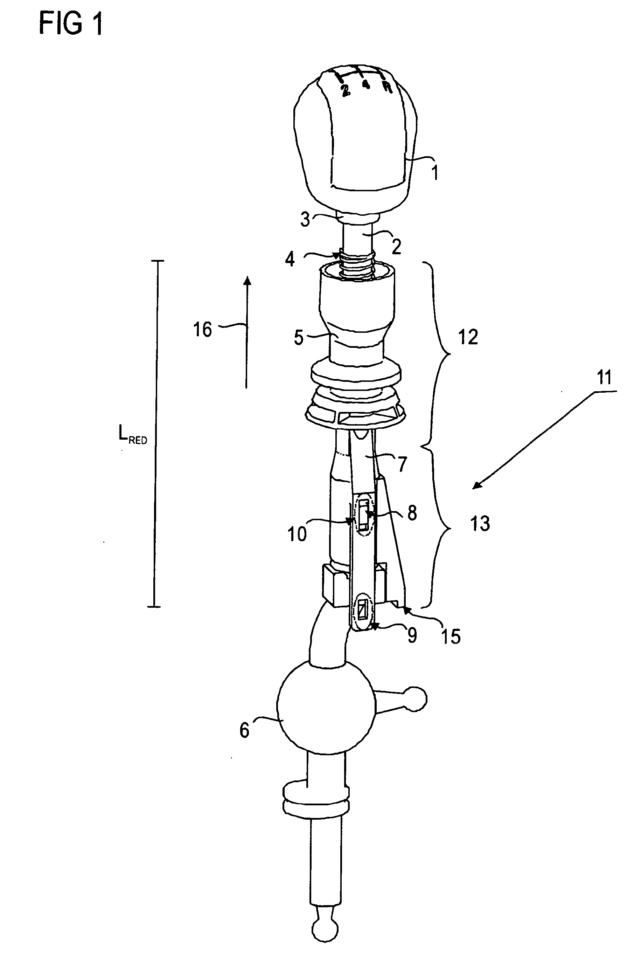

Die **Figur 1** zeigt einen Schalthebel 2 eines manuellen Kraftfahrzeuggetriebes, der in dieser Ausführung mit einem Rückwärtsgangsperr-/Entsperrmechanismus 11 ausgestattet ist. Am unteren Ende des Schalthebels 2 ist ein Kugelgelenk 6 angeordnet, das eine Schwenkbewegung des Schalthebels 2 um eine oder mehreren Achsen ermöglicht, so dass die Gangstufen oder die Leerlaufstellung des Fahrzeuggetriebes eingelegt werden können. Am oberen Ende des Schalthebels 2 ist der Handknauf 1 aufgesteckt, der mit einem Haltering 3 befestigt ist, um ein Verdrehen auf dem Schalthebel 2 zu verhindern. Bisher war der untere Bereich des Handknaufes 1 nicht zugänglich, da der Rückwärtsgangsperr-/Entsperrmechanismus 11 beziehungsweise die Hülse 5 des Rückwärtsgangsperr-/Entsperrmechanismus 11 diesen Bereich verdeckten.

In dieser besonderen Ausführung ist die Länge des Rückwärtsgangsperr-/Entsperrmechanismus 11 verkürzbar. In Figur 1 ist der Rückwärtsgangsperr-/Entsperrmechanismus 11 in der reduzierten Länge L_{RED} dargestellt. Um die Einstellung der kurzen Länge zu ermöglichen, besteht der Rückwärtsgangsperr-/Entsperrmechanimus 11 aus zwei Baugruppen 12 und 13. Die obere Baugruppe 12 kann durch eine Ausnehmung (nicht in Figur 1 dargestellt) in die untere Baugruppe 13 geschoben werden. Zur Verkürzung des Rückwärtsgangsperr-/Entsperrmechanismus 11 wird die Hülse nach unten geschoben. Bei der Zugstange 7, die zwischen den beiden Baugruppen 12 und 13 angeordnet ist, rastet beim nach unten Schieben der zweite Einrastschlitz 10 in eine Rastnase 8 der unteren Baugruppe 13 ein. Hierdurch ist die reduzierte Länge L_{RED} des Rückwärtsgangsperr-/Entsperrmechanismus 11 fixiert. Nun ist der Bereich des Schalthebels 2 unterhalb des Handknaufes 1 zugänglich. In dieser Ansicht ist auch die Feder 4 zu sehen, die zwischen Hülse 5 und Handknauf 1 angeordnet ist und die eine Rückstellkraft nach betätigtem Entsperren der Rückwärtsgangsperr-/Entsperrmechanismus 11 erzeugt. In der reduzierten Länge L_{RED} des Rückwärtsgangsperr-/Entsperrmechanismus 11 können die beiden Baugruppen 12 und 13 nicht weiter zusammengeschoben werden. Es kann lediglich die obere Baugruppe 12 erneut nach oben geschoben werden, dies ist durch den Pfeil 16 mit Pfeilspitze nach oben angedeutet.

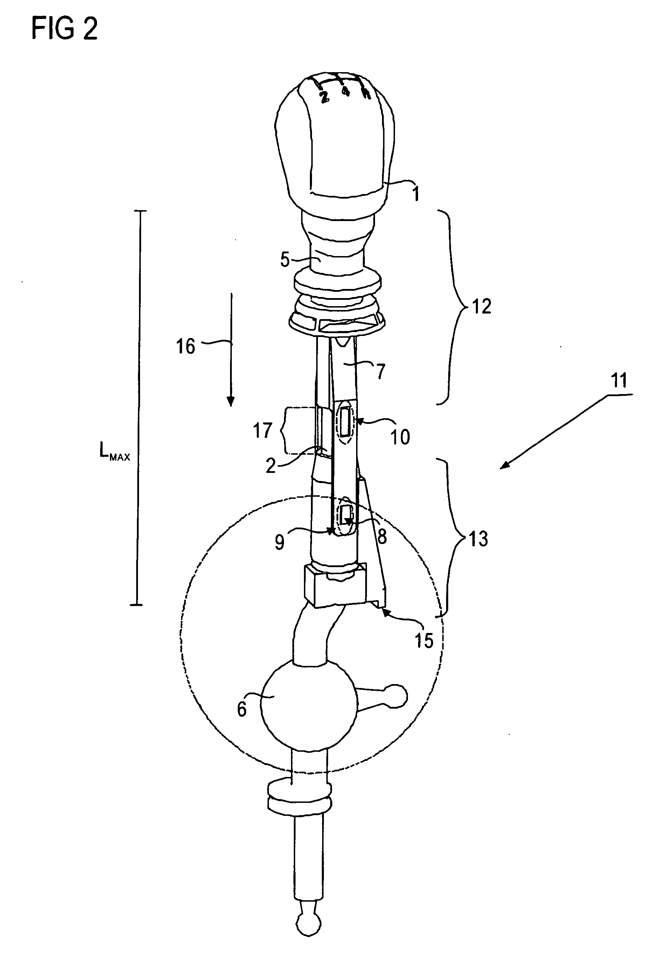

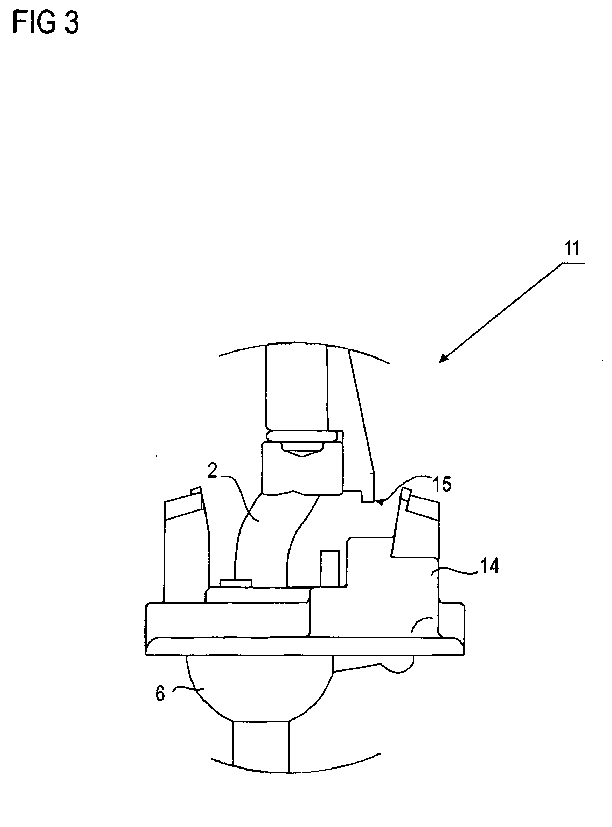

Die **Figur 2** zeigt den Schalhebel 2 aus Figur 1. In Figur 2 wurde lediglich die obere Baugruppe 12 durch Ziehen oder Drücken der Hülse 5 in Richtung Handknauf 1 bewegt. Durch die Bewegung der Hülse 5 wird der zweite Einrastschlitz 10 von der Rastnase 8 gelöst und wird entrastet. Durch weitere Bewegung wird der erste Einrastschlitz 9 der Zugstange 7 in der Rastnase 8 der unteren Baugruppe 13 eingerastet. Hierbei ist nun die maximale Länge L_{MAX} des Rückwärtsgangsperr-/Entsperrmechanismus 11 eingestellt. In dieser Position ist nun auch die Ausnehmung 17 zwischen den beiden Baugruppen 12 und 13 zu erkennen. Weiterhin kann in dieser Position eine Kraftübertragung der Zugkraft über die Hülse 5 an die untere Baugruppe 13 stattfinden, um die Sperre zum Einlegen des Rückwärtsganges zu entsperren. Der durch eine gestrichelte Ellipse umrahmte Bereich aus Figur 2 wird in Figur 3 vergrößert dargestellt.

Die **Figur 3** zeigt in einer Detailansicht die untere Baugruppe 13 am Schalthebel 2. Zusätzlich ist in Figur 3 eine Sperrkontur 14 oberhalb der Gelenkkugel 6 dargestellt, die verhindert, dass die Sperrnase 15 an der unteren Baugruppe 13 und somit der Schalthebel 2 unbeabsichtigt nach rechts bewegt werden kann, wodurch der Rückwärtsgang eingelegt würde. Erst wenn durch Ziehen oder Drücken der Hülse 5 die untere Baugruppe 13 angehoben wird, kann die Sperrnase 15 die Sperrkontur 14 passieren, wodurch der Schalhebel 2 nach rechts geschwenkt werden kann und dadurch der Rückwärtsgang eingelegt wird.

### BEZUGSZEICHENLISTE:

- 1: Handknauf
- 2: Schalt-/Wählhebel
- 3: Haltering
- 4: Feder
- 5: Hülse
- 6: Kugelgelenk
- 7: Zugstange
- 8: Rastnase
- 9: erster Einrastschlitz
- 10: zweiter Einrastschlitz
- 11: Rückwärtsgangsperr-/Entsperrmechanismus
- 12: Obere Baugruppe des Rückwärtsgangsperr-/Entsperrmechanismus
- 13: Untere Baugruppe des Rückwärtsgangsperr-/Entsperrmechanismus
- 14: Sperrkontur
- 15: Sperrnase für Rückwärtsgang
- 16: Mögliche Bewegungsrichtung der oberen Baugruppe
- 17: Ausnehmung
- L_{RED}: Reduzierte Länge des Entsperrmechanismus
- L_{MAX}: Maximale Länge des Entsperrmechanismus

## Patentansprüche

1. Schalt-/Wählhebel (2) eines Kraftfahrzeuggetriebes zum manuellen, automatischen oder semiautomatischen Schalten, mit einem Handknauf (1), der am oberen Ende des Schalt-/Wählhebels (2) befestigbar ist und eine Griffmöglichkeit für die Hand des Kraftfahrzeugfahrers bildet und einem Entsperrmechanismus (11), der durch Ziehen oder Drücken einer Hülse (5) in Richtung Handknauf (1) entsperrt, wodurch das Einlegen des Schalt-/Wählhebels (2) in eine gewünschte Getriebeposition ermöglicht wird, und dessen Länge (L_{MAX}) reversibel verkürzt werden kann, so dass bei verkürzter Länge (L_{RED}) die Unterseite des Handknaufes (1) im Bereich des Schalt-/Wählhebels (2) zugänglich wird
**dadurch gekennzeichnet,**
**dass** der Entsperrmechanismus (11) zumindest einen lösbaren Rastmechanismus mit einer ersten und zweiten Rastposition aufweist, wobei in der ersten Rastposition eine Kraftübertragung zwischen Hülse (5) und der Sperrmechanik ermöglicht wird und in der zweiten Rastposition die verkürzte Länge (L_{RED}) des Entsperrmechanismus (11) fixiert wird.

2. Schalt-/Wählhebel (2) gemäß dem voranstehenden Anspruch 1, **dadurch gekennzeichnet, dass** der Entsperrmechanismus (11) zumindest aus zwei Baugruppen (12, 13) besteht, die entlang des Schalt-/Wählhebels (2) gegeneinander, vorzugsweise ineinander, verschiebbar ausgeführt sind, wodurch eine Verkürzung des Entsperrmechanismus (11) resultiert.

3. Schalt-/Wählhebel (2) gemäß dem voranstehenden Anspruch 2, **dadurch gekennzeichnet, dass** die beiden Baugruppen (12, 13) des Entsperrmechanismus (11) ineinander verschiebbar ausgeführt sind.

4. Schalt-/Wählhebel (2) gemäß einem der voranstehenden Ansprüche, **dadurch gekennzeichnet, dass** zwischen den mindestens zwei Baugruppen (12, 13) ein Zugelement angeordnet ist.

5. Schalt-/Wählhebel (2) gemäß dem voranstehenden Anspruch 4, **dadurch gekennzeichnet, dass** das Zugelement eine Zugstange (7) ist.

6. Schalt-/Wählhebel (2) gemäß einem der voranstehenden Ansprüche 2 bis 5, **dadurch gekennzeichnet, dass** zwischen den mindestens zwei Baugruppen (12, 13) mindestens ein Federelement angeordnet ist, welches die reversible Rückverlängerung zumindest teilweise unterstützt.

7. Schalt-/Wählhebel (2) gemäß einem der voranstehenden Ansprüche 2 bis 6, **dadurch gekennzeichnet, dass** die mindestens zwei Baugruppen (12, 13) als Hülsen ausgebildet sind, die über den Schalt-/Wählhebel (2) geschoben sind.

8. Schalt-/Wählhebel (2) gemäß einem der voranstehenden Ansprüche 1 bis 7, **dadurch gekennzeichnet, dass** der Entsperrmechanismus (11) derart ausgeführt ist, das dieser 10 % bis mindestens 30 %, der ursprünglichen Länge (L_{MAX}) verkürzbar ist.

9. Schalt-/Wählhebel (2) gemäß einem der voranstehenden Ansprüche , **dadurch gekennzeichnet, dass** der Rastmechanismus derart ausgeführt ist, dass die erste Rastposition durch Bewegung der Hülse (5) vom Handknauf (1) weg gelöst wird und automatisch in die zweite Rastposition einrastet.

10. Schalt-/Wählhebel (2) gemäß einem der voranstehenden Ansprüche , **dadurch gekennzeichnet, dass** der Rastmechanismus derart ausgeführt ist, dass die zweite Rastposition durch Bewegung der Hülse (5) zum Handknauf (1) hin gelöst wird und automatisch in die erste Rastposition einrastet.

11. Schalt-/Wählhebel (2) gemäß einem der voranstehenden Ansprüche , **dadurch gekennzeichnet, dass** der Rastmechanismus durch zumindest eine Nut oder einen Schlitz (9, 10) und eine in diese eingreifende Rastnase (8) gebildet wird, wobei entweder die Nut, der Schlitz (9, 10) oder die Rastnase (8) an der Zugstange (7) oder an einer Baugruppe (12, 13) angeordnet ist.

12. Schalt-/Wählhebel (2) gemäß einem der voranstehenden Ansprüche, **dadurch gekennzeichnet, dass** der Handknauf (1) mindestens ein lösbares Befestigungsmittel aufweist, mit dem dieser auf dem Schalt-/Wählhebel (2) befestigt werden kann, wobei das Befestigungsmittel nicht sichtbar ist, wenn die Hülse (5) unterhalb des Handknaufes (1) angeordnet ist.

13. Schalt-/Wählhebel (2) gemäß dem voranstehenden Anspruch 12, **dadurch gekennzeichnet, dass** ein Haltering (3) vorgesehen ist, der von unten an den Handknauf (1) geschoben wird und das Befestigungsmittel des Handknaufs (1) auf dem Schalt-/Wählhebel (2) fixiert.

14. Schalt-/Wählhebel (2) gemäß einem der voranstehenden Ansprüche 12 und 13, **dadurch gekennzeichnet, dass** der Handknauf (1) eine klipsbare Verbindung zur Befestigung am Schalt-/Wählhebel (2) aufweist.

15. Schalt-/Wählhebel (2) gemäß einem der voranstehenden Ansprüche, **dadurch gekennzeichnet, dass** der Schalt-/Wählhebel (2) zumindest eine Bohrung und/oder eine Nut aufweist, in die das Befestigungsmittel des Handknaufes (1) eingreift.

16. Schalt-/Wählhebel (2) gemäß einem der voranstehenden Ansprüche 12 bis 15, **dadurch gekennzeichnet, dass** das Befestigungsmittel ein Bajonettverschluss ist.

## Claims

1. Shift/selection lever (2) of a vehicle gear system for manually, automatically or semi-automatically shifting gear, with a manual knob (1) which can be attached to the top end of the shift/selection lever (2) constituting a gripping facility for the hand of the vehicle driver, and a releasing mechanism (11) which releases by pulling or pushing a sleeve (5) in the direction of the manual knob (1) thereby enabling the shift/selection lever (2) to be shifted into a desired gear position, and the length (L_{MAX}) of which can be reversibly shortened so that the bottom face of the manual knob (1) is accessible in the region of the shift/selection lever (2) at the shortened length (L_{RED}),
**characterised in that**
the releasing mechanism (11) has at least one releasable catch mechanism with a first and a second catch position, whereby force can be transmitted between the sleeve (5) and releasing mechanism in the first catch position and the shortened length (L_{RED}) of the releasing mechanism (11) is fixed in the second catch position.

2. Shift/selection lever (2) as claimed in preceding claim 1, **characterised in that** the releasing mechanism (11) comprises at least two component units (12, 13) designed so that they are able to slide towards one another, preferably one inside the other, along the shift/selection lever (2), resulting in a shortening of the releasing mechanism (11).

3. Shift/selection lever (2) as claimed in preceding claim 2, **characterised in that** the two component units (12, 13) of the releasing mechanism (11) are designed so that they are able to slide one inside the other.

4. Shift/selection lever (2) as claimed in one of the preceding claims, **characterised in that** a tension element is disposed between the at least two component units (12, 13).

5. Shift/selection lever (2) as claimed in preceding claim 4, **characterised in that** the tension element is a tension rod (7).

6. Shift/selection lever (2) as claimed in one of preceding claims 2 to 5, **characterised in that** at least one spring element is disposed between the at least two component units (12, 13), which at least partially assists the reversible re-lengthening.

7. Shift/selection lever (2) as claimed in one of preceding claims 2 to 6, **characterised in that** the at least two component units (12, 13) are provided in the form of sleeves, which are pushed over the shift/selection lever (2).

8. Shift/selection lever (2) as claimed in one of preceding claims 1 to 7, **characterised in that** the releasing mechanism (11) is designed so that it can be shorted by 10% to at least 30% of the original length (L_{MAX}).

9. Shift/selection lever (2) as claimed in one of the preceding claims, **characterised in that** the catch mechanism is designed so that the first catch position is released and the second catch position automatically latched by moving the sleeve (5) away from the manual knob (1).

10. Shift/selection lever (2) as claimed in one of the preceding claims, **characterised in that** the catch mechanism is designed so that the second catch position is released and the first catch position automatically latched by moving the sleeve (5) towards the manual knob (1).

11. Shift/selection lever (2) as claimed in one of the preceding claims, **characterised in that** the catch mechanism is provided in the form of at least one groove or a slot (9, 10) and a catch lug (8) engaging in it, and either the groove, the slot (9, 10) or the catch lug (8) is disposed on the tension rod (7) or on a component unit (12, 13).

12. Shift/selection lever (2) as claimed in one of the preceding claims, **characterised in that** the manual knob (1) has at least one releasable fixing means by which it can be secured on the shift/selection lever (2), and the fixing means is not visible when the sleeve (5) is disposed underneath the manual knob (1).

13. Shift/selection lever (2) as claimed in preceding claim 12, **characterised in that** a retaining ring (3) is provided, which is pushed onto the manual knob (1) from underneath and secures the fixing means of the manual knob (1) on the shift/selection lever (2).

14. Shift/selection lever (2) as claimed in one of preceding claims 12 and 13, **characterised in that** the manual knob (1) has a clip-fit connection for fitting it on the shift/selection lever (2).

15. Shift/selection lever (2) as claimed in one of the preceding claims, **characterised in that** the shift/selection lever (2) has at least one bore and/or a groove in which the fixing means of the manual knob (1) engages.

16. Shift/selection lever (2) as claimed in one of preceding claims 12 to 15, **characterised in that** the fixing means is a bayonet fitting.

## Revendications

1. Levier de changement/sélection de vitesses (2) pour une transmission de véhicule automobile à transmission manuelle, automatique ou semi-automatique, avec un pommeau (1), qui peut être fixé à l'extrémité supérieure du levier de changement/sélection de vitesses (2) et forme une possibilité de manipulation pour la main du conducteur et un mécanisme de déblocage (11), qui débloque en tirant ou poussant un manchon (5) dans la direction du pommeau (1), grâce à quoi la mise en position du levier de changement/sélection de vitesses (2) dans une position de transmission souhaitée est rendue possible, et dont la longueur (Lmax) peut être raccourcie, de manière réversible de sorte que par la longueur raccourcie (Lred) le côté inférieur du pommeau (1) est rendu accessible dans la région du levier de changement/sélection de vitesses (2)
**caractérisé en ce que**,
le mécanisme de déblocage (11) présente au moins un mécanisme d'arrêt libérable avec une première et une deuxième position d'arrêt, dans lequel dans la première position d'arrêt une transmission de force entre le manchon (5) et le mécanisme de blocage est rendue possible et dans la deuxième position d'arrêt la longueur raccourcie (Lred) du mécanisme de déblocage (11) est fixée.

2. Levier de changement/sélection de vitesses (2) selon la revendication 1 précédente, **caractérisé en ce que**, le mécanisme de déblocage (11) comprend au moins deux groupes d'éléments (12, 13), qui sont réalisés coulissant l'un contre l'autre, de préférence l'un dans l'autre, le long du levier de changement/sélection de vitesses (2), grâce à quoi il résulte un raccourcissement du mécanisme de déblocage (11).

3. Levier de changement/sélection de vitesses (2) selon la revendication 2 précédente, **caractérisé en ce que**, les deux groupes d'éléments (12, 13) du mécanisme de déblocage (11) sont réalisés coulissants l'un dans l'autre.

4. Levier de changement/sélection de vitesses (2) selon l'une quelconque des revendications précédentes, **caractérisé en ce que**, entre les au moins deux groupes d'éléments (12, 13) est agencé un élément de traction.

5. Levier de changement/sélection de vitesses (2) selon la revendication 4 précédente, **caractérisé en ce que**, l'élément de traction est une tige de traction (7).

6. Levier de changement/sélection de vitesses (2) selon l'une quelconque des revendications 2 à 5 précédentes, **caractérisé en ce que**, entre les au moins deux groupes d'éléments (12, 13) est agencé au moins un élément de ressort, lequel supporte au moins partiellement l'allongement en retour réversible.

7. Levier de changement/sélection de vitesses (2) selon l'une quelconque des revendications 2 à 6 précédentes, **caractérisé en ce que**, les au moins deux groupes d'éléments (12, 13) sont formés de manchons, qui coulissent sur le levier de changement/sélection de vitesses (2).

8. Levier de changement/sélection de vitesses (2) selon l'une quelconque des revendications 1 à 7 précédentes, **caractérisé en ce que**, le mécanisme de déblocage (11) est réalisé de telle sorte que, de 10 % à au moins 30 % de sa longueur initiale (Lmax) est réduite.

9. Levier de changement/sélection de vitesses (2) selon l'une quelconque des revendications précédentes, **caractérisé en ce que**, le mécanisme de déblocage est réalisé de telle sorte que, la première position d'arrêt est libérée par déplacement du manchon (5) du pommeau (1) et s'enclenche automatiquement dans la deuxième position d'arrêt.

10. Levier de changement/sélection de vitesses (2) selon l'une quelconque des revendications précédentes, **caractérisé en ce que**, le mécanisme de déblocage est réalisé de telle sorte que, la deuxième position d'arrêt est libérée par déplacement du manchon (5) du pommeau (1) et s'enclenche automatiquement dans la première position d'arrêt.

11. Levier de changement/sélection de vitesses (2) selon l'une quelconque des revendications précédentes, **caractérisé en ce que**, le mécanisme de déblocage est formé par au moins une rainure ou une fente (9, 10) et une butée d'arrêt (8) engrenée dans celle-ci, dans lequel soit la rainure, la fente (9, 10) ou la butée d'arrêt (8) est agencée sur la tige de traction (7) ou sur un des groupes d'éléments (12, 13).

12. Levier de changement/sélection de vitesses (2) selon l'une quelconque des revendications précédentes, **caractérisé en ce que**, le pommeau (1) présente au moins un moyen de fixation libérable, qu'on peut fixer avec celui-ci au levier de changement/sélection de vitesses (2), dans lequel le moyen de fixation n'est pas visible, quand le manchon (5) est agencé en dessous du pommeau (1).

13. Levier de changement/sélection de vitesses (2) selon la revendication 12 précédente, **caractérisé en ce que**, une bague de blocage (3) est prévue, qui est poussée sous le pommeau (1) et fixe le moyen de fixation du pommeau (1) sur le levier de changement/sélection de vitesses (2).

14. Levier de changement/sélection de vitesses (2) selon l'une quelconque des revendications 12 et 13 précédentes, **caractérisé en ce que**, le pommeau (1) présente un raccord clipsable pour la fixation au levier de changement/sélection de vitesses (2).

15. Levier de changement/sélection de vitesses (2) selon l'une quelconque des revendications précédentes, **caractérisé en ce que**, le levier de changement/sélection de vitesses (2) présente au moins un alésage et/ou une rainure, dans lequel s'engrène le moyen de fixation du pommeau (1).

16. Levier de changement/sélection de vitesses (2) selon l'une quelconque des revendications 12 à 15 précédentes, **caractérisé en ce que**, le moyen de fixation est un emboîtement à baïonnette.
